# EUROPEAN PATENT APPLICATION

(11) **EP 1 433 404 A1**
(43) Date of publication of application: **30.06.2004**
(21) Application number: 03258199.3
(22) Date of filing: 23.12.2003
(51) Int. Cl.: A47J 36/24

(54) **Portable food warming device**

(30) Priority: 27.12.2002 US 331677
(71) Applicant: THE SCHAWBEL CORPORATION, Boston, MA 02129 (US)
(72) Inventor: Shapiro, Stephen, Arlington 02476, Massachusetts (US); Wang, Wen der, Wilmington 01887, Massachusetts (US)
(74) Representative: Granleese, Rhian Jane

(57) **Abstract**

A portable food warmer (5) especially suited for warming baby bottles, soups, saki, and the like is provided. A first receptacle (40) is provided for receiving fuel, preferably a fuel cartridge (100) of butane or other hydrocarbon fuel. A second receptacle (30) is provided to receive a container of food, and a fuel pathway lies between the first (40) and second (30) receptacles; one end is in communication with the first receptacle (40), and the other end is in thermal communication with the second receptacle (30) (e.g., immediately below it). A timer (24) is coupled to the fuel pathway which selectively allows the flow of fuel along the fuel pathway from the first receptacle (40) to the second receptacle (30) for a predetermined period of time, where it is burned to heat the food. The warmer (205) may utilize an electric heating element (258) instead of fuel.

## Description

The invention relates to heating devices, and more specifically, the invention relates to baby bottle warming devices.

Many food items are refrigerated to preserve their freshness and retard bacterial growth. Infant formula and baby food is no exception. However, infants and babies typically consume all of their nourishment at or near body temperature. It is preferred not to give a very young child food straight from the refrigerator, as it may upset his stomach and startle him. Of course, when a child is crying for food, one must heat up the food quickly to calm the child. Yet one must avoid overheating the food, lest the child then commence crying from bums to his mouth and throat. Heating infant and baby food in a microwave oven is ill-advised, since microwave heating is typically uneven and can lead to hot spots in either the food or its container (which can bum the child).

Hence, a number of different devices have been developed to warm baby bottles in a rapid manner without yielding hot spots in the food or container. For example, AVENT (a UK Corporation) sells the Express bottle and baby food warmer. The Express utilizes an electric heating element to impart heat to a basket in which a bottle or jar of baby food is placed, in water. A dial is provided, in theory to control the temperature of the heating element and thus the water bath. A light turns on when the device is plugged in and turns off when the heating element reaches a certain temperature. Essentially, the AVENT device functions like a small electric tea kettle.

The AVENT device is flawed for a number of reasons. First, the device is not portable; it cannot be used outside of the home, since it requires an electric outlet. Second, it does not have a meaningful way to insure that the bottle or baby food does not become overheated and thus dangerous to the child. The Express includes a light, however the light merely informs the user when the device is drawing current to raise the temperature of the heating element. When the light goes off, the heating element is still quite hot, and the bottle and its contents continue to absorb heat therefrom. Consequently, leaving the device unattended, even for a minute, can result in an overly hot bottle/jar. The AVENT device does not even have an on-off switch; when one plugs it in, it begins operating and continues operating until unplugged. Thus, there is no way to insure that the food being heated is not dangerously hot without standing in the vicinity of the device and periodically testing the temperature of the food.

Two similar devices are marketed by THE FIRST YEARS company: The Quick Serve bottle warmer, and the Night & Day bottle warmer. Both products function to heat bottles and jars in the same manner. Water is added to the warming chamber, and the bottle is placed in a basket in the warming chamber. A heating element in the device boils the water, and the resultant steam heats the bottle or jar. When the water has boiled below a certain level, the heating element is deactivated.

These devices also suffer from deficiencies. As with the AVENT device, they are not portable and depend on an electrical outlet for power. Further, although the THE FIRST YEARS devices do shut off at some point, they depend on the user to add the proper amount of water in order for them to shut off in a timely fashion. Parents of infants frequently need to heat food in the middle of the night at a moment's notice; relying on a person's ability to measure water under such conditions is ill-advised and unreliable.

U.S. Patent No. 6,234,165 Creighton et al. (the teachings of which are herein incorporated by reference) discloses a baby bottle warmer in which release of a solution causes an exothermic reaction to generate heated gas to warm the bottle. A solution release mechanism includes an upper unit, a lower unit, and a solution container therebetween. A magnesium wafer is situated below the solution release mechanism so that the released solution flows downward and into contact with the wafer. Because the reaction is a chemical reaction, it is difficult to control how much heat is generated and thus how hot the bottle will get.

The instant assignee owns several U.S. patents for cordless heated appliances: U.S. Patent Nos. 4,699,123; 4,733,651; 4,815,441; and 4,924,849. The teachings of these patents are incorporated by reference herein. The devices disclosed in these patents are primarily hair curling irons and are heated by burning a hydrocarbon fuel such as butane. The butane is provided in convenient cartridges. The cartridges are slid or screwed into the device, and upon user actuation, a valve on the cartridge is opened. Fuel from the cartridge vaporizes, is ignited, and bums to heat a heating element. All of these patents list a number of different devices in which the cordless heating appliance can be implemented, and "baby bottle warmer" is among the items on the list. However, these patents do not teach or suggest how one might implement that invention in a baby bottle warming device, nor do they address the extremely important deficiency of the baby bottle warming field of overheating.

It is an object of the invention to provide a portable device for warming substantially liquid foods such as baby formula, soup, sake, and the like.

It is another object of the invention to provide a portable device for warming substantially liquid foods which is safe and easily set for different foods or different containers.

It is another object of the invention to provide a device for warming baby bottles and the like in a foolproof manner in which overheating is easily avoided.

The above and other objects are fulfilled by the invention, which is a portable food warmer. In one embodiment, the device has a first receptacle for receiving fuel and a second receptacle dimensioned to receive either food or a container of food. A fuel pathway lies between the first and second receptacles, and a timer selectively allows flow of fuel along the fuel pathway from the first receptacle to the second receptacle for a predeterminable period of time. When the fuel is ignited, the ignited fuel is burned at the second end of the fuel pathway, heats the second receptacle, which in turn heats a container of food disposed therein.

The fuel is preferably a valved cartridge of hydrocarbon fuel such as butane. The device preferably includes a plunger projecting at least partially into the first receptacle and mechanically coupled to the timer to selectively engage a valve of a fuel cartridge disposed in the first receptacle when the timer is activated.

The timer and the plunger are preferably connected via a lever arm movable between a first position and a second position. When the timer is activated, the lever arm is in the first position and allows the plunger to engage a fuel cartridge valve in the first receptacle. When the timer shuts off, the lever arm is in the second position, engages the plunger, and prevents the plunger from engaging a valve of a fuel cartridge disposed in the first receptacle. The preferred mechanism for moving the lever arm between its two positions is a rotatable cam wheel having a first radius and a second radius smaller than the first radius against which the lever arm is biased. When the timer is activated, the lever arm engages the first radius, and when the timer shuts off, the lever arm engages the second radius.

Alternatively or in addition, a valve may be disposed in the fuel pathway and coupled to the timer. When the timer is activated, the valve is opened, and when the timer shuts off, the valve is closed.

The timer may be provided with a plurality of preset periods, each of the preset periods corresponding to at least one of a different container and a different type of food. For example, certain baby bottles may require four minutes to heat, whereas other baby bottles may require six minutes. Also, heating soup may require substantially longer time, since soup is typically eaten at significantly higher temperatures than is baby formula.

The invention also contemplates a container, specifically adapted to fit in the second receptacle, for receiving a quantity of liquid or substantially liquid foods. In addition, food may be placed directly in the second receptacle for heating if a separate container is not desired.

In another embodiment, an electric food warmer is provided having an adapter for connection to a power source and an electric heating element connected to the power source. A receptacle adapted to receive food is provided in thermal communication with the heating element, and a timer is coupled to the heating element so as to selectively activate the heating element for a predeterminable period of time. When the heating element is activated, the heating element heats the receptacle, which in turn heats food disposed therein.

Description of the invention will now be given with reference to the appended Figs. 1-9. It should be noted that these figures are exemplary in nature and in no way serve to limit the scope of the invention, which is defined by the claims appearing hereinbelow.

Fig. 1 is a right perspective view of a food warmer in accordance with the invention.

Fig. 2 is a front view of the device shown in Fig. 1.

Fig. 3 is a side sectional view taken along the line III―III of Fig. 2.

Fig. 4 is an enlarged view of a portion of Fig. 3.

Fig. 5 is a rear perspective view of a timing mechanism in accordance with the invention.

Fig. 6 is a top view of the timing mechanism of Fig. 5.

Fig. 7 is a rear sectional view of the timing mechanism and a portion of the fuel pathway of a device in accordance with the invention.

Figs. 8A-C are schematic views of various timing mechanisms in accordance with the invention.

Fig. 9 is a schematic of an electric embodiment of a portable food warmer in accordance with the invention.

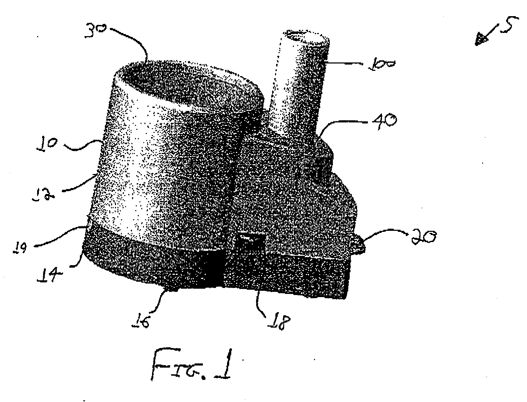

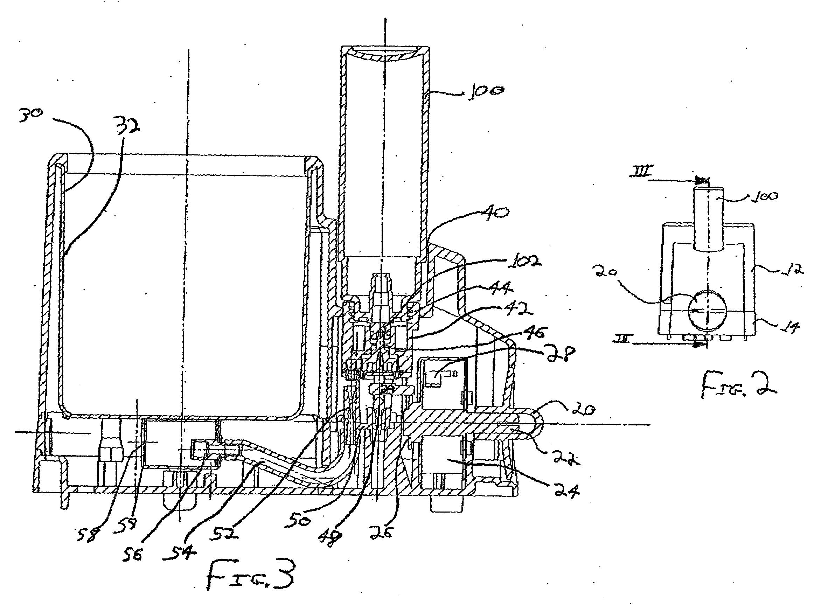

Referring initially to Figs. 1 and 2, food warmer 5 includes a housing 10; in the embodiment shown, housing 10 is made of a main housing section 12 and a bottom housing section 14. Bottom housing 14 may be provided with feet 16 upon which device 5 rests. The provision of feet 16 is preferred, because bottom housing 14 is provided with vents (not shown) to allow for the escape of combustion products and the entry of air; feet 16 allow for improved ventilation via the vents. Of course, any configuration of housing 10 is contemplated as being within the scope of the invention. The exterior of device 5 also includes an ignition button 18 and a timer knob 20, the purposes and functions of which will be explained hereinbelow.

Food warming device 5 includes two receptacles 30 and 40. Receptacle 30 is adapted to receive a container of food such as a baby bottle, a jar of baby food, a container of sake or soup, or the like. Receptacle 30 may also receive a container specially designed to be used with food warmer 5. Receptacle 40 is adapted to receive a portable source of fuel such as a cartridge 100 containing a hydrocarbon fuel such as butane. U.S. Patent Nos. 4,699,123; 4,733,651; 4,815,441; and 4,924,849 describe a type of cartridge contemplated for use in the instant device 5; the teachings of this cartridge are incorporated by reference herein.

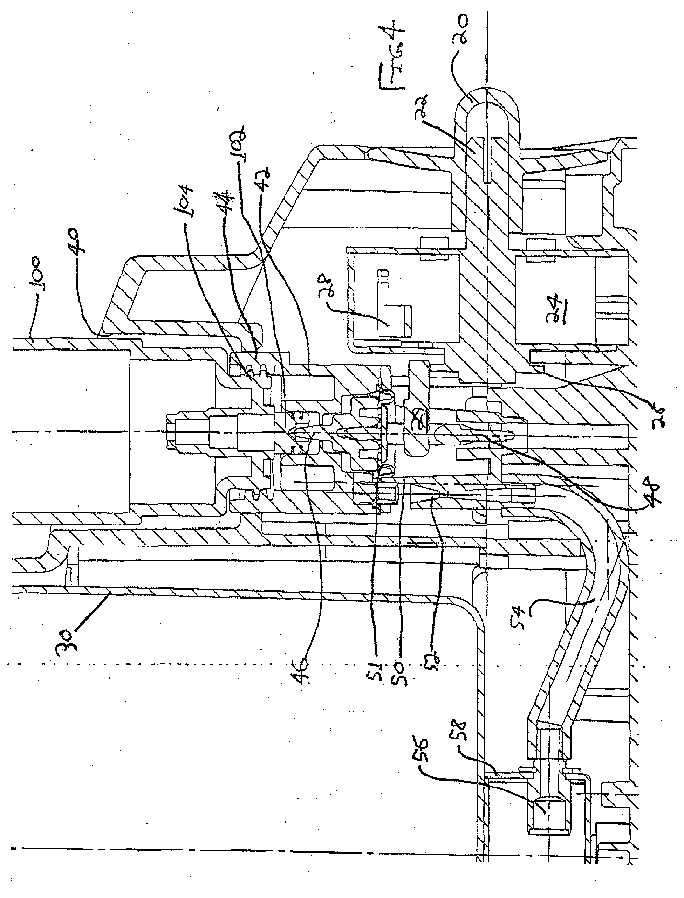

The device 5 in accordance with the invention is shown in section in Figs. 3 (overall) and 4 (timing and fuel pathway). Receptacle 30 includes a heat exchanger 32 into which a food container may be disposed. Heat exchanger 32 is preferably constructed from a thin material having high thermal conductivity, such as aluminum. Heat is supplied beneath heat exchanger (e.g., aluminum tub) 32, and the heat is conducted up the walls of heat exchanger 32. When a food container is placed inside receptacle 30, heat is transferred from the warm/hot heat exchanger 32 to the container and thence to the food inside the container.

Receptacle 40 forms the beginning of the fuel pathway of the device. Disposed in the bottom of receptacle 40 is hub 42 for securely receiving cartridge 100. In the example shown in the figures, hub 42 is provided with screw threads 44 which matingly engage screw threads 104 on cartridge 100. Other known means of securing cartridge 100 with hub 42 are contemplated, for example, providing one of the hub and the cartridge with one or more pins and the other with one or more corresponding L-shaped grooves, some form of detent mechanism, or the like.

Projecting through hub 42 is a reciprocatable plunger 46 adapted to engage valve 102 on a cartridge 100 secured to hub 42. Preferably, the plunger is attached to a plunger boss 48 which is connectable to a mechanism for selectively raising and lowering plunger 46 into and out of hub 42 and thus into and out of engagement with valve 102.

When the plunger engages valve 102, pressurized fuel from the cartridge 100 exits valve 102 and enters the fuel pathway. Preferably, the fuel pathway includes a pressure regulator 50 to regulate the flow of fuel so that it remains constant despite the continual change in pressure of the cartridge as the fuel gets depleted. Part of the pressure regulation process includes the biasing of plunger 46 upwards into hub 42 (the plunger spring is not shown). Pressure regulator 50 includes diaphragm 51, venturi 52, stem 53, and filter 55, substantially as described in US Pat. Nos. 4,699,123; 4,733,651; 4,815,441; and 4,924,849 (the teachings of which are incorporated by reference). Upon exiting pressure regulator 50, the fuel (actually an air/fuel mixture at this point) enters tubing 54, which is preferably made of silicone, and is transported to burner 56 disposed inside combustion box 58.

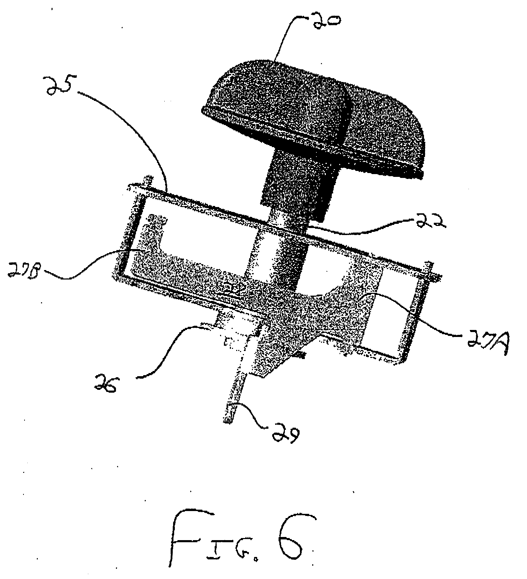

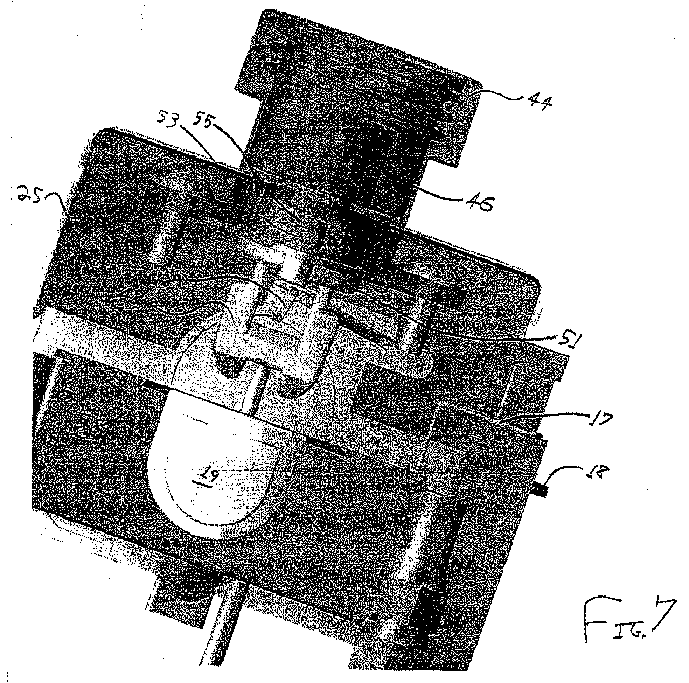

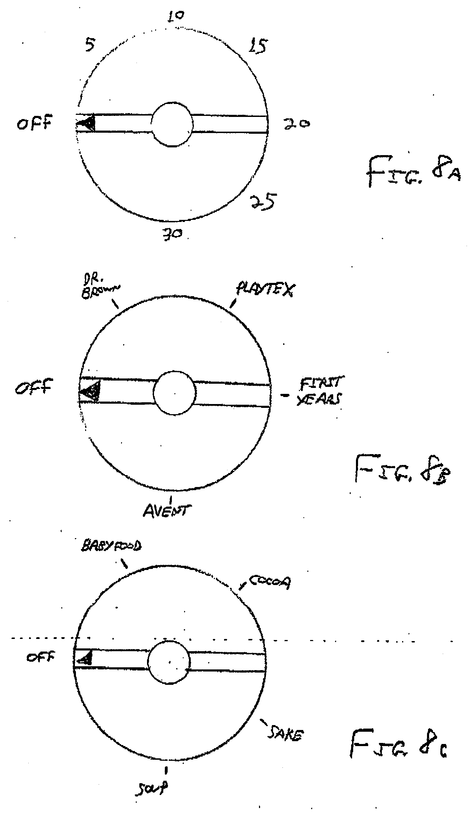

It is within combustion box 58 that the fuel is ignited to provide heat for the warming of the baby bottle/food. As best shown in Fig. 7, electrode wire 17 is connected to ignition button 18 at one end and to combustion box 58 at the other end. Another electrode (not shown) is also connected to the ignition button and projects into (but is not in electrical contact with) combustion box 58. Ignition button 18 is attached to a piezo-electric device (not shown), so that when button 18 is depressed, a spark is generated between combustion box 58 and the other electrode. This spark ignites fuel exiting from burner 56 and cause the fuel to bum. A flame arrester 59 is preferably disposed within combustion box 58 to prevent flames from exiting therefrom. One preferred flame arrester is a metal mesh screen which allows the products of combustion to exit and air to enter the combustion box 58 to enable continued burning of the fuel without suffocating the flame from lack of oxygen. A window 19 in bottom housing 14 (see Figs. 1 and 7) allows the user to see the glow of the flame and/or a screen (not shown) in the burner so that the user knows when the device is on.

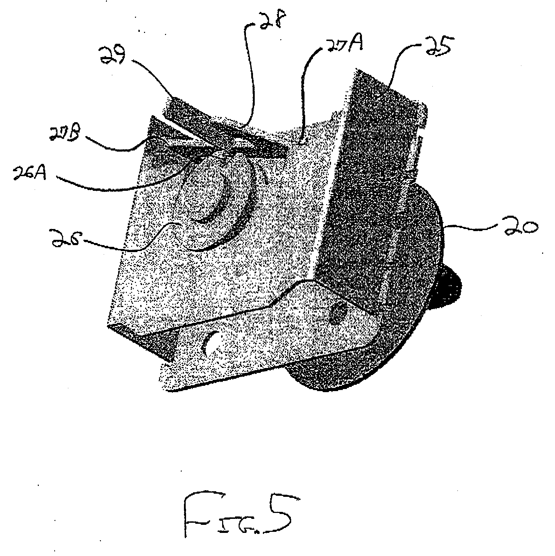

Since the flow of fuel is preferably regulated to be constant so as to provide a constant rate of heat transfer from combustion box 58 to heat exchanger 32 and the contents of receptacle 30, the amount of heat transferred to receptacle 30 (and thus the temperature of the contents therein) may be regulated by selecting a given amount of time for burning the fuel. To wit, a timer is provided in the instant invention; it is best seen in Figs. 4-7. Knob 20 is attached to a timing shaft 22 which, in turn, is connected to timing mechanism 24. Mechanism 24 is shown in box form, as use of a standard, conventional timing mechanism is contemplated. In the preferred embodiment, a timing mechanism having an escapement and a torsion spring is utilized. However, it is also contemplated that an electronic timer may be used instead. In either event, timing mechanism 24 is preferably housed in timing case 25 (see Fig. 5, e.g.). Rotation of knob 20 rotates timing shaft 22 and activates timing mechanism 24.

Disposed on the end of timing shaft 22 opposite knob 20 is a cam wheel 26. Can wheel 26 is provided with an outer diameter and an inner diameter; in the preferred embodiment, as shown in Fig. 5, for example, the inner diameter is provided in the form of notch 26A formed in cam wheel 26. Notch 26A is aligned with the "zero time" or "off" position of the timer. The change in diameter of the cam wheel over its circumference need not be in the form of a notch; instead, it may be provided by a projection, a ramped portion, or similar structure.

Lever arm 28 is attached to timing case 25 in a cantilever manner. As best seen in Fig. 6, end 27A is pivotably fixed to timing case 25, while end 27B may move up and down (into and out of the page of Fig. 6, up and down in Fig. 4). End 27B of lever arm 28 is biased by a spring (not shown) so as to pull lever arm 28 downward into engagement with cam wheel 26 at all times. Lever arm projection 29 protrudes from lever arm 28 out of timing case 25. The proximal end of projection 29 engages the rim of cam wheel 26, and the distal end of projection 29 is mechanically coupled to plunger boss 48, as shown best in Figs. 4 and 7.

When the timer is off, lever arm projection is pulled downward by the lever arm spring in notch 26A on cam wheel 26. The downward force of the lever arm spring is much stronger than the upward force of the plunger spring; thus, lever arm projection 29 pulls plunger boss 48 downward and prevents plunger 46 from engaging valve 102. When the timer is activated, projection 29 rides up one side of notch 26A and comes to rest on the outer diameter of cam wheel 26. When this occurs, lever arm 28 moves upwards, and the downward force pulling on plunger boss 48 is alleviated. As such, the upward biasing force of the plunger spring is free to pull plunger 46 upwards and into engagement with valve 102 of a cartridge disposed in hub 42. When plunger 46 engages valve 102, fuel is allowed to flow into the fuel pathway. One or more depressions of ignition button 18 will ignite the fuel at burner 56, and heat exchanger 32 will heat up. As time progresses, cam wheel 26 and timer shaft 22 rotate. When the timer reaches its zero time position, lever arm projection 29 is pulled into cam wheel notch 26A, and the distal end of projection 29 pulls downward on plunger boss 48 to remove plunger 46 from hub 42 and engagement with valve 102. The flow of fuel -as well as the generation of heat- ceases. The provision of an "instant-off" heat source allows for a method of precisely heating food that does not require constant monitoring to avoid the dangers of overheating.

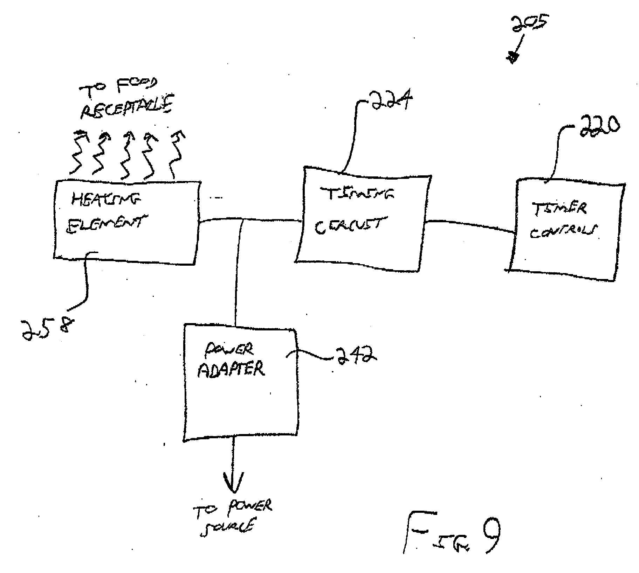

Various embodiments of the timer are shown in Figs. 8A-C. In Fig. 8A, the time is measured in minutes. The user determines how long he wishes to run the device, turns knob 20 to the desired minute indicator, and the timer runs for that predetermined amount of time. In the alternative, the timer may be provided with a plurality of preset periods, each of the preset periods corresponding to at least one of a different container and a different type of food. For example, in Fig. 8B, the timer is shown being used exclusively in connection with a baby bottle warmer. Different brands of baby bottles are shown; the user need only match up the knob with the correct brand name, and the device will run for an amount of time suitable for that brand. Multiple scales may be provided depending on the start temperature of the baby bottle (e.g., refrigerated or 5°C, room temperature or 20°C, etc.). Finally, as shown in Fig. 8C, the timer is shown in connection with a multi-purpose food warming device, listing different foods instead of different container brand names. These timer concepts may be intertwined as well.

Fig. 9 depicts a schematic of an electric version of the instant invention. Instead of utilizing a hydrocarbon fuel source such as butane, food warmer 205 is plugged into a source of power via power adapter 242, for example, a cigarette lighter in an automobile. Warmer 205 may even be adapted to be plugged into a home wall outlet; even though such a design would defeat the portability of the device, it still retains the ability not to overheat food since it possesses a timer as above. In any event, electric heating element 258 is in thermal communication with the food receptacle. When the heating element is activated, the food is warmed.

A timing circuit 224 controls the period of time during which heating element 258 is activated. The user may program timing circuit 224 via timer controls 220. Timing circuit 224 may be a computer chip, a programmable logic controller, or a mechanical timer as described above. Timer controls 220 may be a keypad, a touch screen, or a mechanical control such as a knob as above.

In operation, the user places the food in the food receptacle and manipulates timer controls 220 to control the operation of timing circuit 224. Timing circuit 224 causes the device to draw power via power adapter 242 to activate heating element 258. Heating element 258 generates heat which warms the food in the food receptacle. When the timer reaches zero time, the heating element is deactivated, and heat is no longer transferred into the food.

The invention is not limited to the above description. For example, as mentioned above, a spring biases the plunger in an upward direction, and another stronger spring biases the timer lever arm projection in a downward direction. When the lever arm rides along the outer diameter of the cam wheel, the lever arm is not in contact with the plunger structure, and the plunger is allowed to be biased upwards by the plunger spring. When the clock hits zero, the timer lever arm sits above and is pulled into a notch in the wheel by the timer spring, thereby pulling the plunger out of engagement with the cartridge. The timing mechanism may instead employ one spring and one lever. The spring would bias the lever to push in the plunger, and the cam wheel would have a high spot at the OFF position to lift the lever away from the plunger. As a further embodiment, the plunger and the end of the lever arm may be integrated, so that when the timer is not at zero, the proximal end of the lever arm rides on the outer diameter of the cam wheel, causing the distal end to be raised, which raises the plunger upwards (since the plunger is now integral with the distal end of the lever arm). Then, when the timer hits zero, the proximal end falls by gravity into the notch (or otherwise reduced diameter) of the cam wheel, and the plunger at the distal end also falls out of engagement with the cartridge valve. However, one spring is required for the pressure regulator. Its elimination would result in unregulated gas flow.

The timing mechanism also need not have a lever. In one alternative embodiment, the regulator spring permanently biases the plunger toward cartridge, and a pin on the timer cam wheel is included to lift the plunger directly.

Further, the timer disclosed in the preferred embodiment is a mechanical timer. It is also contemplated to utilize an electronic timer in the invention. Connected to a valve in the fuel flow path, when the timer is activated, the timer sends a signal to open the valve, and when the timer shuts off, it sends a signal to close the valve. Such an embodiment might include a battery to operate the valve. The valve preferably fails closed in the event the batteries fail.

In addition, the food warmer shown includes a receptacle for receiving a cartridge of fuel. However, the device may instead have a fuel receptacle that directly receives a quantity of fuel in the manner of a reservoir. Similarly, the food warmer has been described as receiving a container of food. However, it is also contemplated that the invention includes a use and an embodiment in which the food is placed directly in the receptacle and warmed.

Having described the invention with reference to the drawings, it should be understood that the scope of the invention is not limited by the drawings but rather is defined by the claims appearing hereinbelow. Variations and modifications to the above description that would be obvious to one skilled in the art are contemplated as within the scope of the invention.

## Claims

1. A portable food warmer, comprising:
a first receptacle for receiving fuel;
a second receptacle adapted to receive a container of food;
a fuel pathway between said first and second receptacles, said fuel pathway having a first end in communication with said first receptacle and a second end in thermal communication with said second receptacle; and
a timer, coupled to said fuel pathway, selectively allowing flow of fuel along said fuel pathway from said first receptacle to said second receptacle for a predeterminable period of time,
wherein when fuel is ignited, the ignited fuel is burned at said second end of said fuel pathway, heats said second receptacle, which in turn heats a container of food disposed therein.

2. A portable food warmer according to Claim 1, wherein said first receptacle is adapted to receive a hydrocarbon fuel cartridge having a valve.

3. A portable food warmer according to Claim 2, further comprising a plunger projecting at least partially into said first receptacle and mechanically coupled to said timer to selectively engage a valve of a fuel cartridge disposed in said first receptacle when said timer is activated.

4. A portable food warmer according to Claim 3, further comprising a plunger boss, reciprocatably adjacent said first receptacle, wherein said plunger is attached to said plunger boss.

5. A portable food warmer according to Claim 3, said timer further comprising a lever arm movable between a first position and a second position and having a projection mechanically coupleable to said plunger.

6. A portable food warmer according to Claim 4, said timer further comprising a lever arm movable between a first position and a second position and having a projection mechanically coupleable to said plunger boss.

7. A portable food warmer according to Claim 5, wherein when said timer is activated, said lever arm is in said first position and allows said plunger to engage a valve of a fuel cartridge disposed in said first receptacle.

8. A portable food warmer according to Claim 7, wherein when said timer shuts off, said lever arm is in said second position, engages said plunger, and prevents said plunger from engaging a valve of a fuel cartridge disposed in said first receptacle.

9. A portable food warmer according to Claim 8, further comprising a cam wheel having a first radius and a second radius smaller than said first radius, said lever arm being biased against said cam wheel,
wherein when said timer is activated, said lever arm engages said first radius, and when said timer shuts off, said lever arm engages said second radius.

10. A portable food warmer according to Claim 9, wherein said second radius is formed as a notch in said cam wheel.

11. A portable food warmer according to Claim 9, wherein said lever arm is biased against said cam wheel.

12. A portable food warmer according to Claim 11, wherein said plunger is biased towards said first receptacle and wherein when said lever arm engages said second radius, said lever arm overrides said bias of said plunger and withdraws said plunger at least partially from said first receptacle.

13. A portable food warmer according to Claim 1, wherein said second receptacle is adapted to receive a baby bottle.

14. A portable food warmer according to Claim 2, further comprising a pressure regulator interposed into said fuel pathway, wherein said pressure regulator maintains constant fuel pressure to maintain constant temperature in said second receptacle.

15. A portable food warmer according to any preceding claim, wherein said second receptacle is an aluminum tub.

16. A portable food warmer according to any preceding claim, further comprising a heat exchanger disposed below said second receptacle substantially surrounding said second end of said fuel pathway,
wherein the fuel is ignited and burned within said heat exchanger.

17. A portable food warmer according to any preceding claim, further comprising a valve disposed in said fuel pathway and coupled to said timer, wherein when said timer is activated, said valve is opened, and when said timer shuts off, said valve is closed.

18. A portable food warmer according to any preceding claim, wherein said timer is provided with a plurality of preset periods, each of said preset periods corresponding to at least one of a different container and a different type of food.

19. A portable baby bottle warmer, comprising:
a first receptacle for receiving fuel;
a second receptacle adapted to receive a baby bottle;
a fuel pathway between said first and second receptacles, said fuel pathway having a first end in communication with said first receptacle and a second end in thermal communication with said second receptacle; and
timing means for selectively allowing flow of fuel along said fuel pathway from said first receptacle to said second receptacle for a predeterminable period of time,
wherein when fuel is ignited, the ignited fuel is burned at said second end of said fuel pathway, heats said second receptacle, which in turn heats a container of food disposed therein.

20. A portable baby bottle warmer according to Claim 19, wherein said first receptacle is adapted to receive a hydrocarbon fuel cartridge having a valve.

21. A portable baby bottle warmer according to Claim 20, further comprising a plunger projecting at least partially into said first receptacle and mechanically coupled to said timing means to engage a valve of a fuel cartridge disposed in said first receptacle when said timing means is activated.

22. A portable baby bottle warmer according to Claim 21, further comprising a lever arm connected to said timing means movable between a first position and a second position and having a projection mechanically coupleable to said plunger,
wherein when said timing means is activated, said lever arm is in said first position and allows said plunger to engage a valve of a fuel cartridge disposed in said first receptacle, and
wherein when said timing means shuts off, said lever arm is in said second position, engages said plunger, and moves said plunger away from said second receptacle to thereby prevent said plunger from engaging a valve of a fuel cartridge disposed in said first receptacle.

23. A portable baby bottle warmer according to Claim 22, further comprising a cam wheel having a first radius and a second radius smaller than said first radius, said lever arm being biased against said cam wheel,
wherein when said timing means is activated, said lever arm engages said first radius, and when said timing means shuts off, said lever arm engages said second radius.

24. A portable baby bottle warmer according to Claim 23, wherein said plunger is biased towards said first receptacle and wherein when said lever arm engages said second radius, said bias of said lever arm overrides said bias of said plunger and withdraws said plunger at least partially from said first receptacle.

25. A portable baby bottle warmer according to any of claims 19 to 24, further comprising a valve disposed in said fuel pathway and coupled to said timing means, wherein when said timing means is activated, said valve is opened, and when said timing means shuts off, said valve is closed.

26. A portable baby bottle warmer according to any of claims 19 to 25, wherein said timer is provided with a plurality of preset periods, each of said preset periods corresponding to at least one of a different container and a different type of food.

27. A portable baby bottle warmer in accordance with any of claims 19 to 16, wherein said first receptacle comprises a reservoir for receiving a hydrocarbon fuel.

28. A portable food warmer, comprising:
a first receptacle for receiving fuel;
a second receptacle adapted to receive food;
a fuel pathway between said first and second receptacles, said fuel pathway having a first end in communication with said first receptacle and a second end in thermal communication with said second receptacle; and
a timer, coupled to said fuel pathway, selectively allowing flow of fuel along said fuel pathway from said first receptacle to said second receptacle for a predeterminable period of time,
wherein when fuel is ignited, the ignited fuel is burned at said second end of said fuel pathway, heats said second receptacle, which in turn heats food disposed therein.

29. A portable food warmer according to Claim 28, wherein said second receptacle is adapted to receive a baby bottle.

30. A portable food warmer according to either of claims 28 or 29, wherein said second receptacle is an aluminum tub.

31. A portable food warmer according to any of claims 28 to 30, wherein said timer is provided with a plurality of preset periods, each of said preset periods corresponding to at least one of a different food container and a different type of food.

32. A food warmer, comprising:
an adapter for connection to a power source;
an electric heating element connected to said power source;
a receptacle adapted to receive food, said receptacle in thermal communication with said heating element; and
a timer, coupled to said heating element, selectively activating said heating element for a predeterminable period of time,
wherein when said heating element is activated, said heating element heats said receptacle, which in turn heats food disposed therein, and wherein when said heating element is deactivated, heat is substantially no longer transferred to the food.

33. A food warmer according to Claim 32, wherein said receptacle is adapted to receive a baby bottle.

34. A food warmer according to either of claims 32 or 33, wherein said second receptacle is an aluminum tub.

35. A food warmer according to any of claims 32 to 34, wherein said timer is provided with a plurality of preset periods, each of said preset periods corresponding to at least one of a different container and a different type of food.
